# EUROPEAN PATENT SPECIFICATION

(11) **EP 3 816 670 B1**
(45) Date of publication and mention of the grant of the patent: **05.11.2025**
(21) Application number: 19799504.6
(22) Date of filing: 09.04.2019
(51) Int. Cl.: G01S 13/95, G01S 7/288, G01S 7/292, G01S 13/12, G01S 13/42, G01S 13/58

(54) **METEOROLOGICAL RADAR DEVICE, METEOROLOGICAL OBSERVATION METHOD, AND METEOROLOGICAL OBSERVATION PROGRAM**
METEOROLOGISCHES RADARGERÄT, METEOROLOGISCHES BEOBACHTUNGSVERFAHREN UND METEOROLOGISCHES BEOBACHTUNGSPROGRAMM
DISPOSITIF, PROCÉDÉ ET PROGRAMME D'OBSERVATION MÉTÉOROLOGIQUE

(30) Priority: 09.05.2018 JP 2018090550
(43) Date of publication of application: 05.05.2021
(73) Proprietor: FURUNO ELECTRIC CO., LTD., Nishinomiya-City, Hyogo 662-8580 (JP)
(72) Inventor: TAKASHIMA, Yuya, Nishinomiya-City, Hyogo 662-8580 (JP)
(74) Representative: Müller Hoffmann & Partner
(86) International application number: PCT/JP2019/015376
(87) International publication number: WO 2019/216086

(56) References cited:
- EP-A2- 0 447 159
- JP-A- 2000 230 976
- JP-A- 2005 249 662
- JP-A- 2007 322 331
- JP-A- 2007 538 245
- JP-A- 2014 081 331
- JP-A- S55 116 284
- KR-B1- 101 853 122
- LI GANG ET AL: "A velocity dealiasing scheme for C-band weather radar systems", ADVANCES IN ATMOSPHERIC SCIENCES / CHINESE COMMITTEE OF METEOROLOGY AND ATMOSPHERIC PHYSICS AND INSTITUTE OF ATMOSPHERIC PHYSICS, ACADEMIA SINICA, vol. 31, no. 1, 1 January 2014 (2014-01-01), CN, pages 17 - 26, XP055874960, ISSN: 0256-1530, DOI: 10.1007/s00376-013-2251-8
- ADACHI HIDEO , SATO YUKO : "Doppler weather radar", TOSHIBA REVIEW, vol. 55, no. 5, 1 May 2000 (2000-05-01), pages 27 - 30, XP055759411, ISSN: 0372-0462
- ADACHI, AHORO; YAMAUCHI, HIROSHI; SATO, EIICHI: "Observation of tornados with polarimetric and fast-scanning radars", PROCEEDINGS OF THE 2014 GENERAL CONFERENCE OF THE INSTITUTE OF ELECTRONICS, INFORMATION AND COMMUNICATION ENGINEERS COMMUNICATION 1; MARCH 18 - 21, 2014 , 4 March 2014 (2014-03-04), pages SS-80 - SS-81, XP009524700, ISSN: 1349-1369
- FUKUMA, YUICHIRO ET AL: "Improvement of Weather Clutter Suppression Performance by Doppler Speed Aliasing Correction", PROCEEDINGS OF THE 2008 IEICE GENERAL CONFERENCE COMMUNICATION 1; MARCH 18 - 21, 2008 , vol. 1, 5 March 2008 (2008-03-05), pages 248, XP009524698, ISSN: 1349-1369

## Description

### Technical Field

The present invention relates to a weather radar apparatus for observing a state of an observation object related to weather such as clouds and rain by using Doppler velocity data.

### Background

At present, various kinds of weather radar devices are practically used. For example, JP2000-230976 A, JP2014-173865 and JP20 13-205151 describe weather radar devices using Doppler velocity data.

The weather radar described in JP2014-173865 transmits a pulse signal to a cloud or rain to be observed, and receives the reflected signal to detect the amount of phase change. The weather radar described in JP2013-205151 calculates Doppler velocity data of observation objects such as clounds and rain from the phase change amount. The weather radar described in JP2014-173865 observes the state of observation objects such as clouds and rain from the Doppler velocity data. JP2000-230976 A discloses a weather radar apparatus having components according to the preamble part of claim 1.

Further relevant prior art is disclosed in EP 0 447 159 A2 and Li Gang et al: "A velocity dealiasing scheme for C-band weather radar systems", Advances in Atmospheric Sciences, vol. 31, no. 1, pages 17-26, 2014.

However, the observed phase change amount of the pulse signal becomes discontinuous when the pulse signal exceeds one wavelength. The amount of phase change of the pulse signal observed may be discontinuous due to the influence of noise or the like. Due to such a discontinuous change in the amount of phase change, the Doppler velocity data becomes an erroneous value.

Accordingly, it is an object of the present invention to provide a technique capable of detecting an erroneous value of the Doppler velocity data even if the value of the Doppler velocity data becomes erroneous due to a discontinuous change in the amount of phase change.

### SUMMARY OF THE INVENTION

The above object is solved by the claimed subject-matter according to the independent claims. In an aspect of the present disclosure, there is provided a weather radar apparatus according to independent claim 1. In this configuration, the Doppler velocity data of an observation object (for example, clouds and rain) used for weather observation continuously changes, and the weather radar detects discontinuous points by using an approximate function. By detecting such a discontinuous portion, the weather radar device replaces the Doppler velocity data of the discontinuous portion with an approximate value calculated by an approximate function.

According to the present invention, even if the Doppler velocity data has an erroneous value due to a discontinuous change in the amount of phase change, the incorrect Doppler velocity data can be accurately detected.

In another aspect of the present disclosure, there is provided a weather radar observation method according to independent claim 7.

In yet another aspect of the present disclosure, there is provided a non-transitory computer-readable recording medium according to independent claim 9.

### BRIEF DESCRIPTION OF THE DRAWINGS

The summary above, as well as the following detailed description of illustrative embodiments, is better understood when read in conjunction with the appended drawings.
FIG. 1 is a functional block diagram of a weather observation data generation module in a weather radar apparatus according to a first embodiment not covered by the subject-matter of the claims but useful for understanding the invention;
FIG. 2 is a functional block diagram of a weather radar apparatus according to a first embodiment not covered by the subject-matter of the claims but useful for understanding the invention;
FIG. 3 is a diagram showing the concept of distance direction loopback correction by the data processor module of FIG. 1;
FIG. 4 shows an example of a general uniform wind distribution;
FIG. 5 is a diagram illustrating the concept of substitution of exclusion values in the azimuthal direction;
FIGs. 6(A), 6(B), and 6(C) are diagrams showing transitions of correction and replacement of Doppler velocity data when the configuration and processing of the weather observation data generation module of FIG.1 are used;
FIG. 7 is a flow chart showing basic processing performed by the processor implementing the weather observation data generation module 10 of FIG. 1;
FIG. 8 is a flowchart showing the process of correcting loopback in the distance direction;
FIG. 9 is a flowchart showing the process of replacing an exclusion value in the azimuth direction;
FIG. 10 is a functional block diagram of a weather observation data generation module of a weather radar apparatus according to a second embodiment according to the claimed invention;
FIGs. 11(A), 11(B), and 11(C) are diagrams showing Doppler velocity data during the first correction and replacement processing performed by the weather observation data generation module of FIG. 10;
FIGs. 12(A), 12(B), and 12(C) are diagrams illustrating the concept of generating dummy data by the weather observation data generation module of FIG. 10;
FIG. 13(A) is a diagram showing Doppler velocity data in which the first correction and replacement are completed and dummy data are added, and FIGs. 13(B) and 13(C) are diagrams showing Doppler velocity data in the second correction and replacement processing performed by the weather observation data generation module of FIG. 10;
FIG. 14 is a flowchart showing basic processing performed by a processor implementing the weather observation data generation module of FIG. 10;
FIG. 15 is a functional block diagram of a weather observation data generation module of a weather radar apparatus according to a third embodiment not covered by the subject-matter of the claims but useful for understanding the invention;
FIGs. 16(A), 16(B) and 16(C) are diagrams showing weather observation data when the weather observation data generation module of FIG.1 is used;
FIGs. 17(A), 17(B) and 17(C) are diagrams showing weather observation data when the weather observation data generation module of FIG. 10 is used; and
FIGs. 18(A) and 18(B) are diagrams showing weather observation data when the weather observation data generation module of FIG. 10 is used.

### DETAILED DESCRIPTION OF THE INVENTION

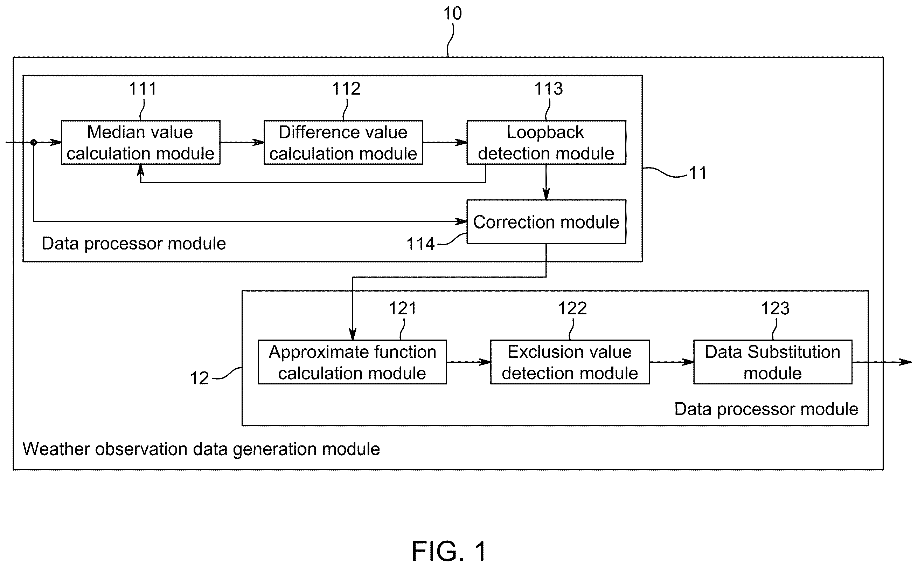

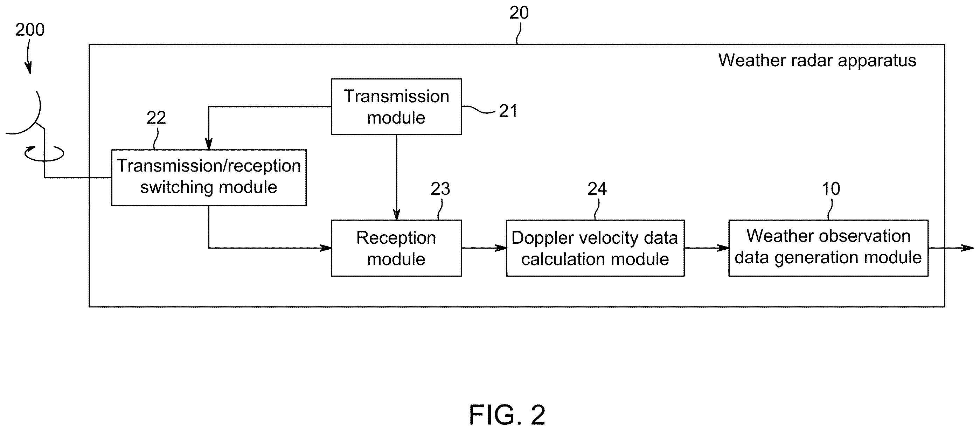

A weather radar apparatus 20 according to the first embodiment, which is not covered by the subject-matter of the claims but is useful for understanding the invention, is described with reference to FIG.2, and
a weather observation data generation module 10 in the weather radar apparatus 20 is described with reference to FIG. 1.

The structure and processing of the functions of the weather radar apparatus 20 other than the weather observation data generation module 10 are the same as those of known pulse Doppler radars that have been applied for and published by the applicant, and detailed description thereof will be omitted.

As shown in FIG. 2, the weather radar apparatus 20 includes a transmission module 21, a transmission/reception switching module 22, a reception module 23, a Doppler velocity data calculation module 24, and a weather observation data generation module 10.

The transmission module 21 generates a pulse signal having a prescribed repetition period. The frequency of the carrier signal which is the source of the pulse signal is set according to the type of the observation object. In the weather radar apparatus 20 of the present embodiment, observation objects are objects for weather observation, such as rain and clouds. Therefore, the frequency is set to reflect rain and clouds.

The transmission module 21 outputs the pulse signal to the transmission/reception switching module 22 and outputs a part thereof to the reception module 23. The transmission/reception switching module 22 switches the transmission period and the reception period and repeats this operation.

Specifically, the transmission/reception switching module 22 outputs a pulse signal to an antenna 200 by connecting the transmission module 21 and the antenna 200 during the transmission period. On the other hand, the transmission/reception switching module 22 outputs the reflected signal of the pulse signal from the antenna 200 to the reception module 23 during the reception period.

The antenna 200 transmits a pulse signal at a predetermined elevation angle while rotating on a horizontal plane around a rotation axis, and receives the reflected signal. The reception module 23 performs predetermined amplification processing or the like on the reflected signal.

The reception module 23 calculates a pulse signal and a phase change amount, i.e. phase difference between the pulse signal and the reflected signal of a reflection signal to the pulse signal. The reception module 23 outputs the phase change amount to the Doppler velocity data calculation module 24.

The Doppler velocity data calculation module 24 calculates Doppler velocity data based on the amount of phase change using, for example, a dual Pulse Repetition Frequencies (PRF) method.

The Doppler velocity data is expressed by a Doppler velocity calculated for each position expressed in two dimensions of a distance direction and an azimuth direction with the position of the antenna 200 as a center position (reference point). The distance direction is a direction radially separating from the center position. The azimuth direction is a direction parallel to the rotation direction of the antenna 200.

The Doppler velocity data calculation module 24 outputs the Doppler velocity data of one frequency (1 scan worth) of the antenna 200 as a set to the weather observation data generation module 10.

As shown in FIG. 1, the weather observation data generation module 10 includes a data processor module 11 and a data processor module 12. Each of the data processor module 11 and the data processor module 12 includes a hardware such as a processor for performing a process described later, and a program for realizing a process described later.

In general, the data processor module 11 corrects the loopback of the Doppler velocity data in the distance direction and the data processor module 12 replaces the exclusion value in the azimuth direction with respect to the Doppler velocity data.

The weather observation data generation module 10 can detect erroneous values of Doppler velocity data in the distance direction and the azimuth direction caused by the phase change amount using the data processor module 11 and the data processor module 12. Then, the weather observation data generation module 10 can replace the erroneous value of the Doppler velocity data with a more accurate value corresponding to the observation object.

It should be noted, that the data processor module 11 is not necessarily configured, and may be omitted as long as the environment and the setting are such that the loopback in the distance direction does not occur.

### Configuration of data processor module 11 and correction of distance direction loopback.

As shown in FIG. 1, the data processor module 11 includes a median value calculation module 111, a difference value calculation module 112, a loopback detection module 113, and a correction module 114.

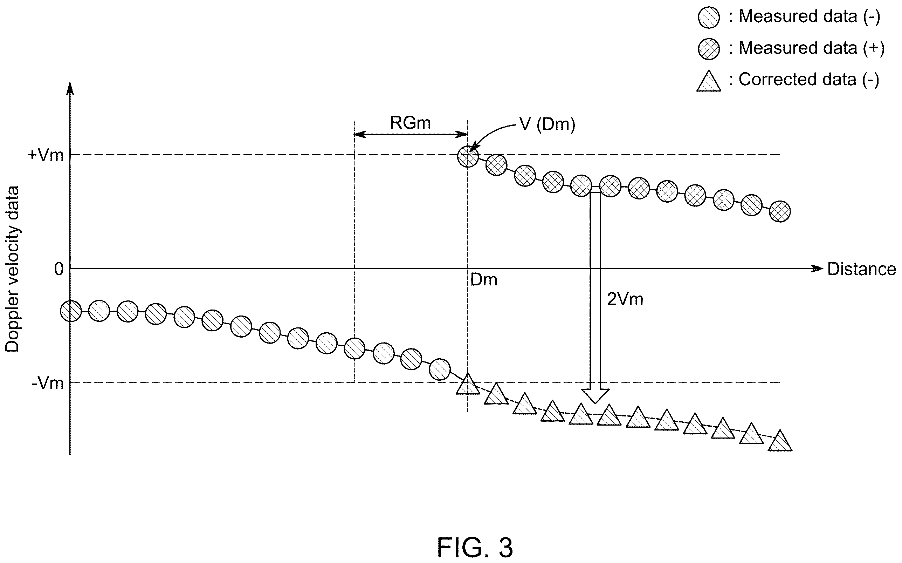

The median value calculation module 111 acquires a plurality of Doppler velocity data arranged in a distance direction at one side of attention, and sets a target position (For example, the Dm of FIG. 3) in the distance direction in the bearing.

The median value calculation module 111 acquires Doppler velocity data within a range (For example, the RGm of FIG. 3) of a predetermined distance on the center side with the target position as the distal end. The median value calculation module 111 calculates a median value of Doppler velocity data within this range. If there are a plurality of Doppler velocity data within this range, the median value calculation module 111 calculates a median value from the plurality of Doppler velocity data. However, if there is one Doppler velocity data within this range, the median value calculation module 111 sets the Doppler velocity data as the median value.

The median value calculation module 111 outputs the median value to the difference value calculation module 112. At this time, the median value calculation module 111 correlates the Doppler velocity data of the target position with the median value and outputs them to the difference value calculation module 112.

The median value calculation module 111 calculates a median value for each target position while shifting the target position along the distance direction in order from the position near the center. At this time, when the loopback detection module 113 detects the loopback, the median value calculation module 111 stops the shift of the target position and the calculation of the median value.

The difference value calculation module 112 calculates a difference value (For example, V (Dm) in FIG. 3) between Doppler velocity data of a target position and a median value, and outputs the difference value to the loopback detection module 113.

The loopback detection module 113 determines the occurrence of loopback in the distance direction by using the difference value. More specifically, when the difference value is equal to or greater than a threshold value for determining loopback, the loopback detection module 113 determines that loopback in the distance direction has occurred from the target position at corresponding time.
Alternatively, when the difference value is less than the threshold value for determining loopback, the loopback detection module 113 determines that loopback in the distance direction has not occurred at the target position at corresponding time. The loopback detection module 113 further detects the reverse direction of the sign of the Doppler velocity data, and outputs the determination result of the occurrence of loopback and the sign inversion direction to the correction module 114. The loopback detection module 113 also outputs the determination result of the occurrence of loopback to the median value calculation module 111.

The correction module 114 corrects the Doppler velocity data arranged in the distance direction including the target position when the determination result of occurrence of loopback is obtained. More specifically, the correction module 114 corrects the Doppler velocity data beyond the target position among the Doppler velocity data arranged in the distance direction.

The correction module 114 obtains a corrected value by adding or subtracting a double value (For example, 2Vm in FIG. 3) of an upper limit value (For example, Vm in FIG. 3) of actually measurable Doppler velocity data determined according to the specifications of the transmission module 21 and the reception module 23 to or from the Doppler velocity data of the position to be corrected.

When the Doppler velocity data is inverted from a negative value to a positive value, the correction module 114 subtracts 2Vm from the Doppler velocity data (measured data). Alternatively, when the Doppler velocity data is inverted from a positive value to a negative value, the correction module 114 adds 2Vm to the Doppler velocity data (measured data).

With such a configuration and processing, even if the Doppler velocity data becomes an erroneous value due to the loopback in the distance direction, the erroneous value can be corrected to an accurate value corresponding to actual weather conditions and the observation object.

FIG. 3 is a diagram showing the concept of the distance direction loopback correction by the data processor module 11 of FIG.1. In FIG. 3, the horizontal axis represents the distance, and the vertical axis represents the Doppler velocity data. As illustrated in FIG. 3, the Doppler velocity data (measured data) are discontinuous only at the target position Dm. Further, the Doppler velocity data (measured data) at a plurality of positions in a predetermined range on the center side of the target position Dm is significantly different from the Doppler velocity data (measured data) at the target position Dm in value.

For example, in Fig. 3, the Doppler velocity data (measured data) at a plurality of positions in a predetermined range on the center side of the target position Dm is a negative value, and is substantially equal to the lower limit value - Vm of the Doppler velocity data. Alternatively, the Doppler velocity data (measured data) of the target position Dm is a positive value, and is substantially equal to the upper limit value + Vm of the Doppler velocity data.

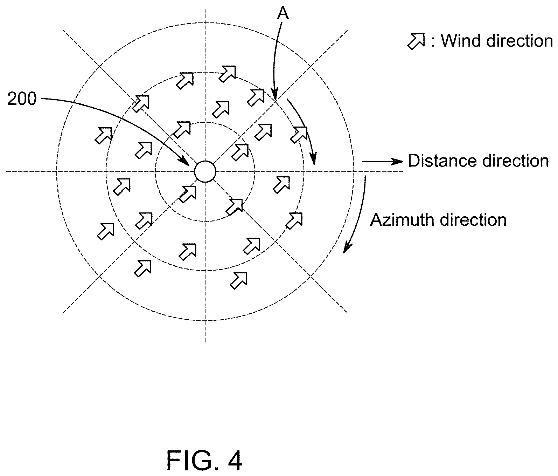

FIG. 4 shows an example of a general uniform wind distribution. As shown in FIG. 4, the direction of the wind is substantially the same at each position aligned in the distance direction, and the wind velocity varies constantly or continuously when local turbulence or the like does not occur. Therefore, as described above, it is not usually conceivable that the value of the Doppler velocity data becomes discontinuous only at the target position Dm at the plurality of positions arranged along the distance direction, and the value changes substantially. Therefore, at the target position Dm, it can be determined that loopback occurs due to the limit of the calculation process of the Doppler velocity data.

Using this principle, the data processor module 11 realizes the above-described configuration and processing to detect the loopback at the target position Dm. At this time, as described above, the data processor module 11 detects the loopback while shifting the target position Dm sequentially from a position near the center to a distance. Thus, the data processor module 11 can definitely and accurately detect the occurrence of the loopback and the position where the loopback occurs.

Then, the data processor module 11 corrects the Doppler velocity data of each position beyond the target position Dm. In this case, the correction value is twice the upper limit value Vm as described above. In FIG. 3, since the Doppler velocity data is inverted from a negative value to a positive value at the target position Dm, the data processor module 11 calculates correction data by subtracting 2Vm from the Doppler velocity data (measured data) V (Dm) at the target position Dm. Then, the data processor module 11 similarly calculates correction data by subtracting 2Vm from Doppler velocity data (measured data) at each position farther than the target position Dm.

As a result, as shown in FIG. 3, continuous and accurate Doppler velocity data corresponding to conditions of the observation object such as actual rain and clouds can be obtained in the distance direction.

### Configuration of the data processor module 12 and correction of exclusion values in the azimuth direction

Referring back to FIG. 1, the data processor module 12 includes an approximate function calculation module 121, an exclusion value detection module 122, and a data substitution module 123.

The Doppler velocity data for one scan output from the data processor module 11 is input to the approximate function calculation module 121. The approximate function calculation module 121 acquires Doppler velocity data arranged in the azimuthal direction at a target distance. The distance of interest is set, for example, by a position where the number of Doppler velocity data arranged in the azimuth direction is large. Alternatively, the attention distance is set by a position where the distance from the center is short.

The approximate function calculation module 121 calculates an approximate function for Doppler velocity data arranged in the azimuthal direction. The approximate function is preferably a periodic function such as a COS function or a SIN function, and may be a function representing a triangular wave. Note that a function whose value varies greatly at one point, and generate a discontinuous point of a value such as a rectangular wave or a saw tooth wave is not applied to the approximate function. The approximate function calculation module 121 outputs an approximate value of Doppler velocity data calculated by an approximate function at each position in the azimuth direction, and actual Doppler velocity data to an exclusion value detection module 122.

The exclusion value detection module 122 compares the approximate value of Doppler velocity data calculated by the approximate function with actual measured Doppler velocity data for each position, and detects the exclusion value on the basis of the comparison result. Specifically, if the difference between the approximate value of the Doppler velocity data and the actually measured Doppler velocity data is equal to or greater than the threshold for detecting the exclusion value, the exclusion value detection module 122 detects the actually measured Doppler velocity data as the exclusion value at this position.

Alternatively, if the difference between the approximate value of the Doppler velocity data and the actually measured Doppler velocity data is less than the threshold for detecting the exclusion value, the exclusion value detection module 122 does not detect the actually measured Doppler velocity data as the exclusion value at this position. The exclusion value detection module 122 outputs the approximate value of the Doppler velocity data, the actually measured Doppler velocity data, and the detection result of the exclusion value to the data substitution module 123.

The data substitution module 123 replaces the exclusion value and actual Doppler velocity data at the detected position with an approximate value calculated by an approximate function based on the detection result of the exclusion value.

With such a configuration and processing, even if the amount of phase change locally changes in the azimuthal direction due to noise or the like and the Doppler velocity data becomes an erroneous value, the erroneous value can be replaced with an accurate value corresponding to actual weather conditions and an observation object.

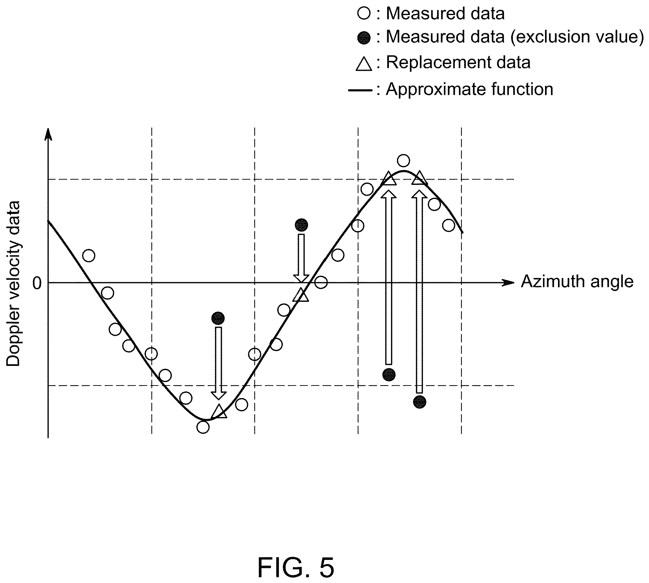

FIG. 5 is a diagram showing the concept of substitution of exclusion values in the azimuth direction. In FIG. 5, the horizontal axis represents a direction such as azimuthal angle, and the vertical axis represents Doppler velocity data. In the diagram shown in FIG. 5, in a plurality of positions (azimuthal angle) in the azimuthal direction, the Doppler velocity data (measured data) are greatly separated from the approximate function composed of the periodic function (such as the COS function).

As shown in FIG. 4, the magnitude of the wind at each position aligned in the azimuthal direction is continuously increased and decreased with one cycle in the azimuthal direction if local turbulence or the like does not occur. That is, the change in the magnitude of the wind can be expressed by a cycle function in which one cycle in the azimuthal direction is one cycle.

Therefore, as described above, it is generally not conceivable that the value of the Doppler velocity data varies greatly locally at a plurality of positions arranged in the azimuthal direction. Therefore, at a position where the value of the Doppler velocity data largely changes, an erroneous phase change amount is detected due to noise or the like, and it can be determined that the erroneous Doppler velocity data is calculated. Using this principle, the data processor module 12 realizes the above-described configuration and processing to detect the exclusion value (actual measurement data with a black circle shown in FIG. 5) in the azimuth direction.

Then, as shown in FIG. 5, the data processor module 12 of FIG.1 replaces the exclusion value with an approximate value represented by replacement data of a triangle mark based on the approximate function represented by a solid line. Thus, continuous and accurate Doppler velocity data corresponding to the state of an observation object such as actual rain and clouds can be obtained with respect to the azimuth direction. By using the configuration and processing described above, the weather observation data generation module 10 of FIG.1 can output Doppler velocity data corresponding to the state of an observation object such as actual rain, clouds, etc.

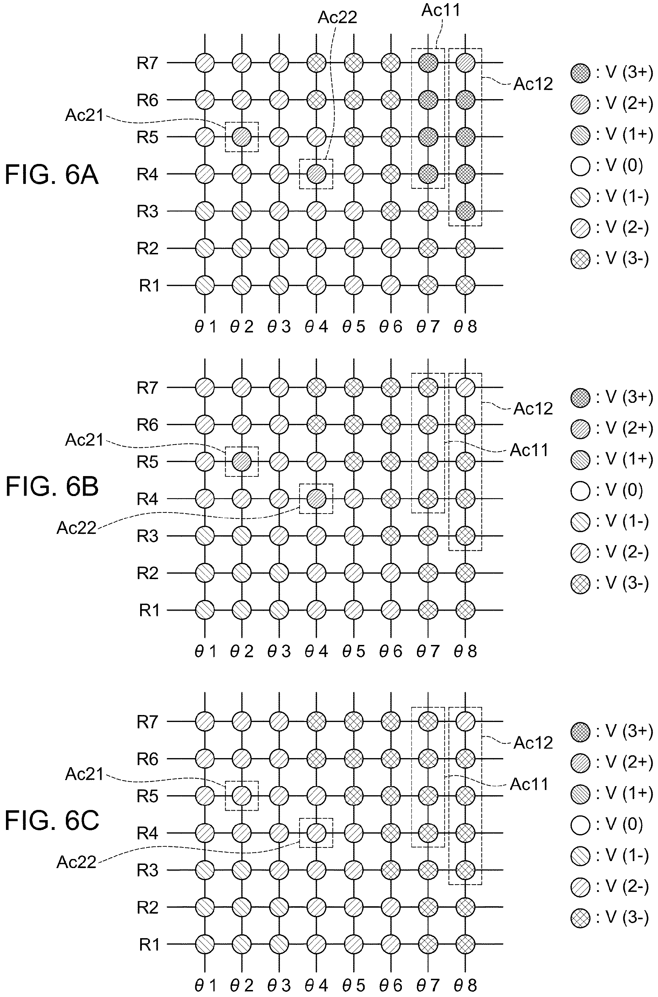

FIGs. 6(A), 6(B), and. 6(C) are diagrams showing transitions in correction and replacement of Doppler velocity data when the configuration and processing of the weather observation data generation module 10 are used.

FIG. 6(A) shows the distribution of the measured Doppler velocity data, FIG. 6(B) shows the distribution of the Doppler velocity data after correction of turning back in the distance direction, and FIG. 6(C) shows the distribution of the Doppler velocity data after replacement of the exclusion value in the azimuth direction.

In FIGs. 6(A), 6(B), and 6(C), R1, R2, R3, R4, R5, R6, and R7 are respective positions in the distance direction, wherein R1 is closest to the center and R7 is farthest from the center. In FIGs. 6(A), 6(B), and 6(C), θ1, θ2, θ3, θ4, θ5, θ6, and θ7 are positions (azimuthal angle) in the azimuth direction. The hatching at each position indicates the positive and negative values of the Doppler velocity data. Further, V(3+), V(2+), and V(1+) are positive values and have a relationship of V(3+) > V(2 +) > V(1+). Furthermore, V (3-), V (2-), and V (1-) are negative values and have a relationship of V (3-) < V (2-) < V (1-). Moreover, V (0) is substantially 0.

As shown in FIG. 6(A), a turn in the distance direction occurs in the region Ac 11 beyond the distance R4 in the direction θ7. In addition, a turn in the distance direction occurs in the range of the region Ac 12 beyond the distance R3 in the azimuth θ8. By using the data processor module 11 of FIG. 1, the loopback in the distance direction is detected and corrected as shown in FIG. 6(B). Thus, in the azimuth θ7 and the azimuth θ8, Doppler velocity data continuing in the distance direction corresponding to actual weather conditions can be obtained along with the conditions of the observation object.

Further, as shown in FIGs.6(A) and 6(B), the exclusion value is generated in the direction θ2 at the distance R5. Further, in the direction θ4 at the distance R4, an exclusion value is generated. By using the data processor module 12 of FIG. 1, the exclusion value in the azimuth direction is detected and corrected as shown in FIG. 6(C). Thus, at the distances R5 and R4, the Doppler velocity data continuing in the azimuthal direction corresponding to actual weather conditions can be obtained along with the conditions of the observation object.

In the above description, each processing of the weather observation data generation module 10 is realized by each individual function module. However, a program for performing a process described later may be stored and performed by a processor.

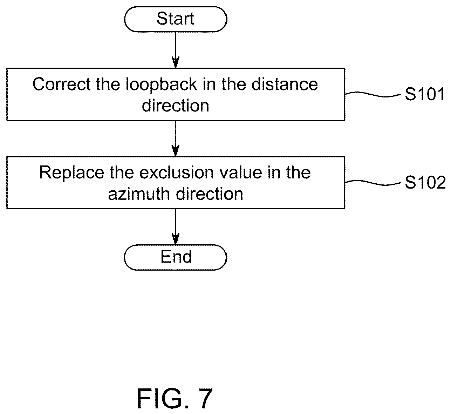

FIG. 7 is a flowchart showing the basic processing performed by a processor for realizing the weather observation data generation module 10 of FIG.1. That is, FIG. 7 is a flowchart showing a weather observation data generation method. The specific processing contents have been described above, and a detailed description thereof will be omitted.

At step S101, the processor corrects the loopback in the distance direction using the Doppler velocity data arranged in the distance direction.

Next, at step S102, the processor replaces the exclusion value in the azimuth direction by using the Doppler velocity data arranged in the azimuth direction.

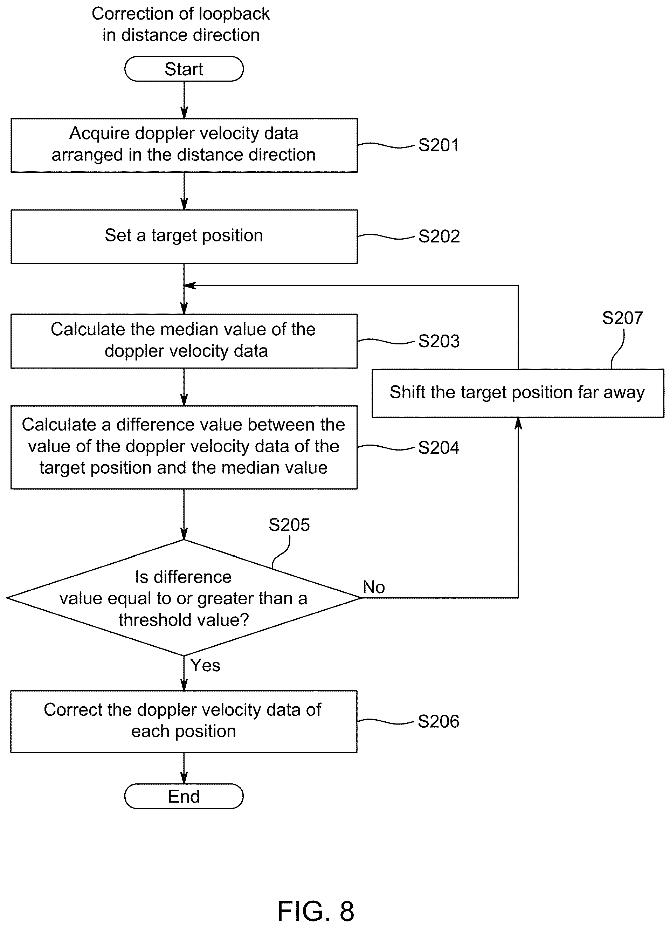

FIG. 8 is a flowchart showing the process of correcting the loopback in the distance direction by a processor for realizing the weather observation data generation module 10 of FIG.1.

At step S201, the processor acquires Doppler velocity data arranged in the distance direction at a target azimuth.

At step S202), the processor sets a target position (for example, Dm in FIG.3).

At step S203, the processor calculates the median value of the Doppler velocity data in a predetermined range (for example, RGm in FIG. 3) on the center side of the target position.

At step S204, the processor calculates a difference value between the value of the Doppler velocity data of the target position and the median value..

At step S205, the processor checks if the difference value is equal to or greater than a threshold value.

When the difference value is equal to or greater than the threshold value, then at step S206, the processor corrects the Doppler velocity data of each position beyond the target position by using the correction value based on the upper limit value of the measured value of the Doppler velocity data.

When the difference value is less than the threshold value, then at step S207, the processor shifts the target position far away, and repeats the processes after step S203.

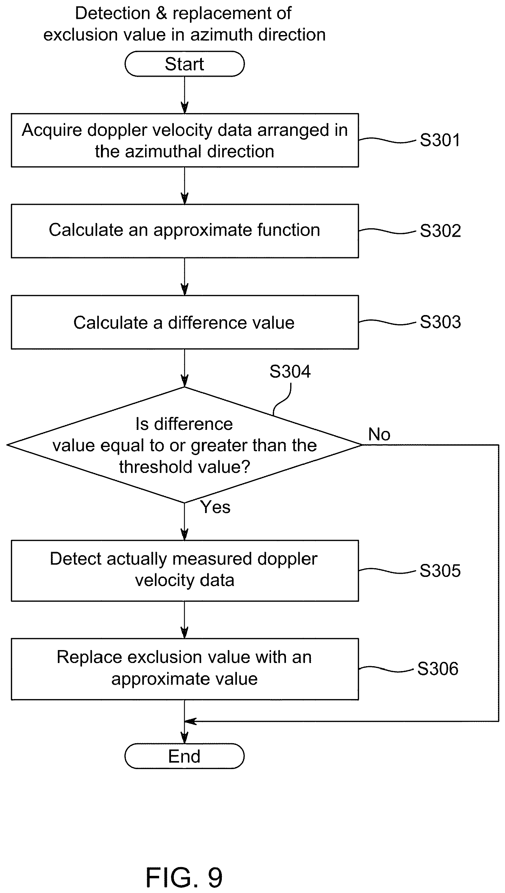

FIG. 9 is a flowchart showing the process of replacing the exclusion value in the azimuth direction by a processor for realizing the weather observation data generation module 10 of FIG.1.

At step S301, the processor acquires Doppler velocity data arranged in the azimuthal direction at a target distance. At step S302, the processor calculates an approximate function using the Doppler velocity data. In this case, the approximate function is a periodic function.

At step S303, the processor calculates a difference value between actually measured Doppler velocity data and an approximate value calculated by an approximate function.

At step S304, the processor checks if the difference value is equal to or greater than the threshold value for detecting the exclusion value.

At step S305, the processor detects the actually measured Doppler velocity data as the exclusion value when the difference value is equal to or greater than the threshold value. At step S306, the processor replaces the exclusion value with an approximate value for the position calculated by the approximate function.

Alternatively, when the difference value is not equal to or greater than the threshold value, the processor does not perform replacement and uses the measured Doppler velocity data as it is.

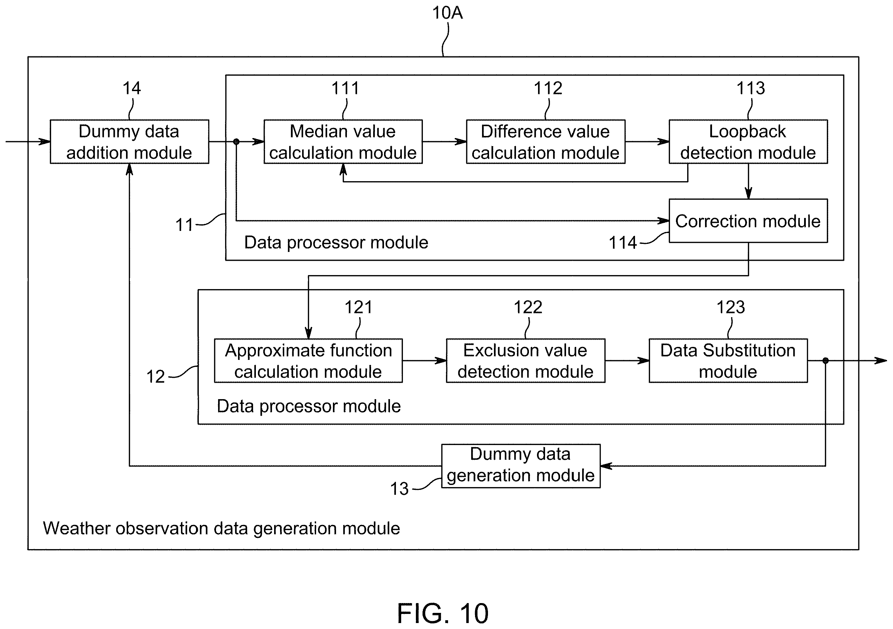

FIG. 10 is a functional block diagram of a weather observation data generation module 10A of a weather radar apparatus (not shown) according to the second embodiment, which is according to the claimed invention. The weather radar apparatus according to the second embodiment differs from the weather radar apparatus 20 of FIG. 2 in the configuration of the weather observation data generation module 10A. The other configurations of the weather radar apparatus of the second embodiment are the same as those of the weather radar apparatus 20. Therefore, a description of the same portion is omitted.

As shown in FIG. 10, the weather observation data generation module 10A differs from the weather observation data generation module 10 in that a dummy data generation module 13 and a dummy data addition module 14 are added as the functional blocks.

The weather observation data generation module 10A repeats the correction of the loopback in the distance direction by the data processor module 11 and the replacement of the exclusion value in the azimuth direction by the data processor module 12 with the processing of the dummy data generation module 13 and the dummy data addition module 14 interposed therebetween.

The dummy data generation module 13 acquires Doppler velocity data for the entire circumference (1 scan worth) in the azimuth direction at a prescribed position in the distance direction, compares the number of Doppler velocity data arranged in the azimuthal direction at each position in the distance direction, and selects a distance at which the Doppler velocity data arranged in the azimuthal direction is less defective.

The dummy data generation module 13 then calculates an approximate function as a periodic function from a plurality of Doppler velocity data arranged in the azimuth direction. Thus, the dummy data generation module 13 can approximately reproduce the wind state in each azimuth direction from the measured Doppler velocity data.

The dummy data generation module 13 calculates an approximate value to the azimuth direction over the entire circumference based on the approximate function. The dummy data generation module 13 outputs the generated approximate value over the entire circumference to a dummy data addition module 14 as dummy data.

The dummy data addition module 14 adds dummy data (Approximate value of each bearing over the entire circumference) as Doppler velocity data at a position closest to the center in the distance direction, and outputs Doppler velocity data for one scan added with the dummy data to the data processor module 11.

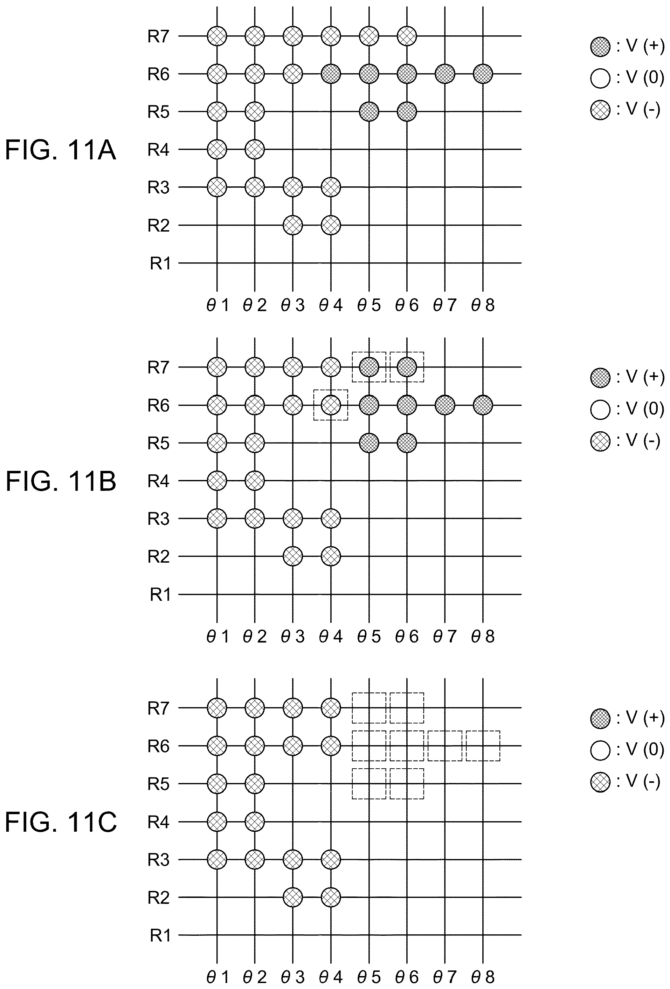

FIGs.11(A), 11(B), and 11(C) are diagrams showing Doppler velocity data during the first correction and replacement processing performed by the weather observation data generation module 10A.

FIG. 11(A) shows the first Doppler velocity data, FIG. 11(B) shows the Doppler velocity data after the first correction of the loopback in the distance direction, and FIG. 11(C) shows Doppler velocity data after replacement of the exclusion value in the first azimuth direction.

Further, in FIGs. 11(A), 11(B), and 11 (C), the Doppler velocity data are hatched for each of positive value, substantially 0, and negative value.

FIGs. 11(A), 11(B), and 11(C) show a region from a distance R1, which is a module of the distance direction, to a distance R7, and a region from an azimuth θ1, which is a part of the azimuth direction, to an azimuth θ8 as a target region.

First, the data processor module 11 uses the actual measured Doppler velocity data to which the dummy data is not added to correct the loopback in the distance direction as described above. For example, when the actually measured Doppler velocity data as shown in FIG. 11 (A) is acquired, the data processor module 11 detects a turn in the distance direction at the position of the distance R4 of the azimuth θ4, the position of the distance R7 of the azimuth θ5, and the position of the distance R7 of the azimuth θ6, and performs correction. As a result, as shown in FIG. 11 (B), the Doppler velocity data of the position of the distance R4 of the azimuth θ4, the position of the distance R7 of the azimuth θ5, and the position of the distance R7 of the azimuth θ6 are corrected.

Next, the data processor module 12 replaces the exclusion value in the azimuth direction using the Doppler velocity data after the loopback correction, as described above. For example, with the Doppler velocity data shown in FIG. 11(B), the data processor module 12 detects the Doppler velocity data of the position of the azimuth θ5 and the position of the azimuth θ6 of the distance R5, the position of the azimuth θ8 from the azimuth θ5 of the distance R6, and the position of the azimuth θ5 and the position of the azimuth θ6 of the distance R7 as exclusion values.

If the exclusion value and the detected Doppler velocity data continue for a predetermined number or more in the azimuth direction, the data processor module 12 deletes the Doppler velocity data to substitute the replacement processing. By this processing, the Doppler velocity data that is estimated to be wrong in a predetermined area is deleted.

As a result, as shown in FIG. 11(C), the Doppler velocity data for the position of the azimuth θ5 and the position of the azimuth θ6 of the distance R5, the position of the azimuth θ5 to the azimuth θ8 of the distance R6, and the position of the azimuth θ5 and the position of the azimuth θ6 of the distance R7 are deleted.

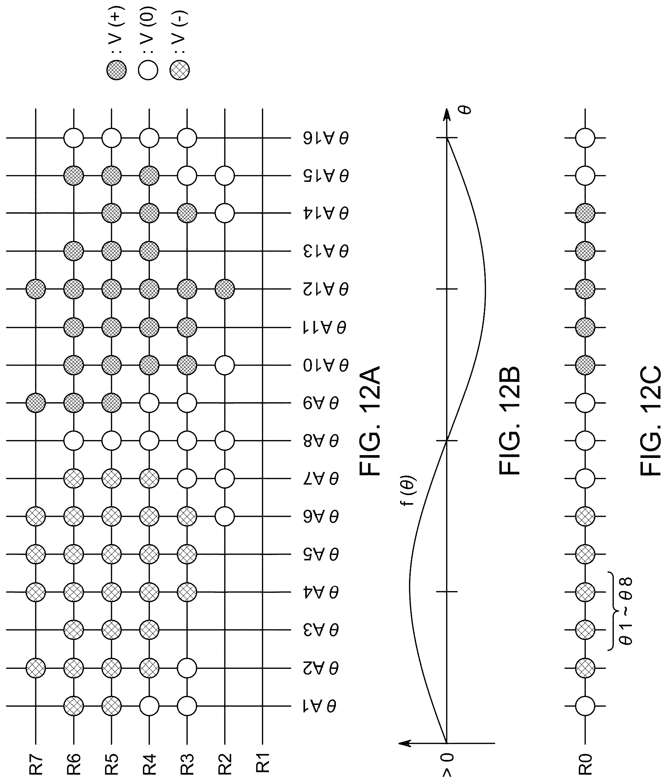

FIGs. 12 (A), 12 (B), and 12 (C) are diagrams for explaining the concept of generating dummy data. FIG. 12(A) shows Doppler velocity data to be approximated for generating dummy data, FIG. 12(B) shows an example of the approximate function, and FIG. 12 (C) shows an example of dummy data.

In FIGs. 12 (A), 12 (B), and 12 (C), the Doppler velocity data are hatched for each of positive value, substantially 0, and negative value. Further, FIGs. 12 (A), 12 (B), and 12 (C) show a region from the distance R1 which is a part of the distance direction to the distance R7, and from the azimuth θA1 to the azimuth θA16 over the entire circumference in the azimuth direction as a target region. The directions θ1 to θ8 shown in FIGs. 11(A), 11(B) and 11(C) correspond to the directions θA3 to θA4 shown in FIGs. 12(A) and 12(C).

Next, the dummy data generation module 13 calculates an approximate function using Doppler velocity data arranged in the azimuthal direction at a predetermined position in the distance direction. In this case, the dummy data generation module 13 is not limited to one position in the distance direction, but may be applied to a plurality of positions adjacent to each other. Further, the Doppler velocity data for calculating the approximate function for each azimuth may be, for example, an average value of the Doppler velocity data at a plurality of positions in the distance direction.

For example, when the Doppler velocity data shown in FIG. 12(A) is obtained, the dummy data generation module 13 calculates an approximate function composed of the periodic function shown in FIG. 12(B) using the Doppler velocity data arranged in the azimuthal direction such as the distance R4, the distance R5, and the distance R6. In the example shown in FIG. 12(B), the approximate function is a COS function or a SIN function. In this case, the approximate function may be a periodic function whose value does not change abruptly.

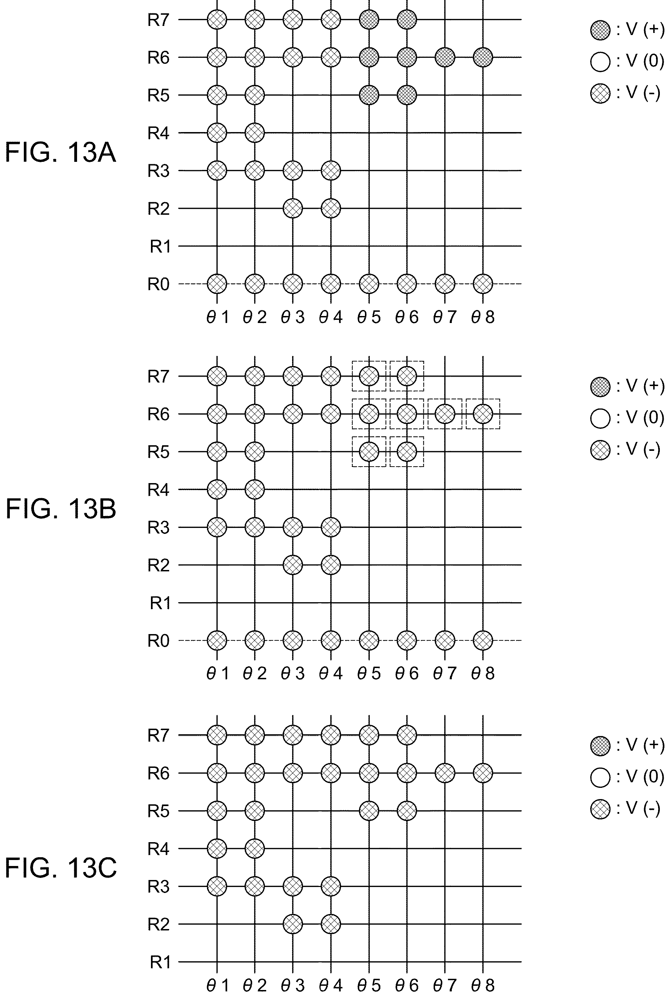

The dummy data generation module 13 calculates an approximate value of the Doppler velocity data at each position in the azimuth direction as shown in FIG. 12(C) by using the calculated approximate function, and sets the approximate value to dummy data. FIG. 13(A) is a diagram that shows Doppler velocity data in which the first correction and replacement are completed and dummy data are added, and in which the Doppler velocity data is hatched for each of positive value, substantially 0, and negative value.. FIG. 13 (A) further shows a region from the distance R1, which is a part of the distance direction, to the distance R7, and a region from the azimuth θ1, which is a part of the azimuth direction, to the azimuth θ8 as a target region.

The dummy data addition module 14 adds dummy data corresponding to a target region as Doppler velocity data at a position closest to the center in the distance direction among dummy data over all directions generated by a dummy data generation module 13. For example, when the dummy data shown in FIG. 12 (C) is obtained, the dummy data addition module 14 adds dummy data having an orientation θ1 to an orientation θ8 at a distance R0 (< R1) as Doppler velocity data, as shown in FIG. 13(A).

Further, as shown in FIG.13 (A), the dummy data addition module 14 adds the Doppler velocity data deleted in the replacement of the first exclusion value performed by the data processor module 12 as the dummy data for the second loopback correction.

FIGs.13 (B) and 13 (C) are diagrams showing Doppler velocity data in the second correction and replacement processing performed by the weather observation data generation module 10A. FIG. 13(B) is a diagram that shows the Doppler velocity data after the second correction of the loopback in the distance direction, and FIG. 13(C) is a diagram that shows Doppler velocity data after replacement of the exclusion value in the second azimuth direction.

Further, in FIGs. 13 (B) and 13 (C), the Doppler velocity data are hatched for each of positive value, substantially 0, and negative value, and FIGs. 13 (B) and 13 (C) show a region from a distance R1, which is a part of the distance direction, to a distance R7, and a region from an azimuth θ1, which is a part of the azimuth direction, to an azimuth θ8 as a target region.

The data processor module 11 performs a loopback correction in the distance direction as described above using the Doppler velocity data to which the first correction and replacement are performed and dummy data are added. For example, as shown in FIG. 13(A), when the Doppler velocity data in which the first correction, replacement, and addition of dummy data are performed is acquired, the data processor module 11 detects a turn in the distance direction at the position of the distance R5 of the azimuth θ5, the position of the distance R5 of the azimuth θ6, the position of the distance R6 of the azimuth θ7, and the position of the distance R6 of the azimuth θ8, and performs correction.

This is realized by adding the dummy data described above. That is, in the actual measured Doppler velocity data, no Doppler velocity data exists on the center side in the distance direction at the position of the distance R5 in the azimuth θ5, the position of the distance R5 in the azimuth θ6, the position of the distance R6 in the azimuth θ7, and the position of the distance R6 in the azimuth θ8, so that the turn-back cannot be detected. However, as described above, the loopback is detected by adding the dummy data to the position closest to the center.

Further, since the dummy data uses the actual measured Doppler velocity data, the dummy data accurately represents the state of the wind for each direction. Therefore, the loopback can be accurately detected in accordance with wind conditions. As a result, as shown in FIG. 13(B), the loopback is corrected for the Doppler velocity data with respect to the distance in the distance direction starting from the position of the distance R5 of the azimuth θ5, the position of the distance R5 of the azimuth θ6, the position of the distance R6 of the azimuth θ7, and the position of the distance R6 of the azimuth θ8.

Next, the data processor module 12 replaces the exclusion value in the azimuth direction as described above using the Doppler velocity data after the second loopback correction.

For example, with the Doppler velocity data shown in FIG. 13(B), the data processor module 12 detects the Doppler velocity data as an exclusion value. In FIG. 13(B), no substitution is performed because no exclusion value is detected. Therefore, in this case, as shown in FIG. 13(C), the Doppler velocity data after the replacement of the exclusion value is the same as the Doppler velocity data before the replacement of the exclusion value.

By using such a configuration and processing, even when the measured Doppler velocity data cannot detect the turn-back due to the lack of the Doppler velocity data or the like, the weather observation data generation module 10A can accurately detect and correct the turn-back according to wind conditions at the arrangement position.

In the above description, each processing of the weather observation data generation module 10A is realized by each individual functional module. However, a program for performing a process described later may be stored and performed by the processor.

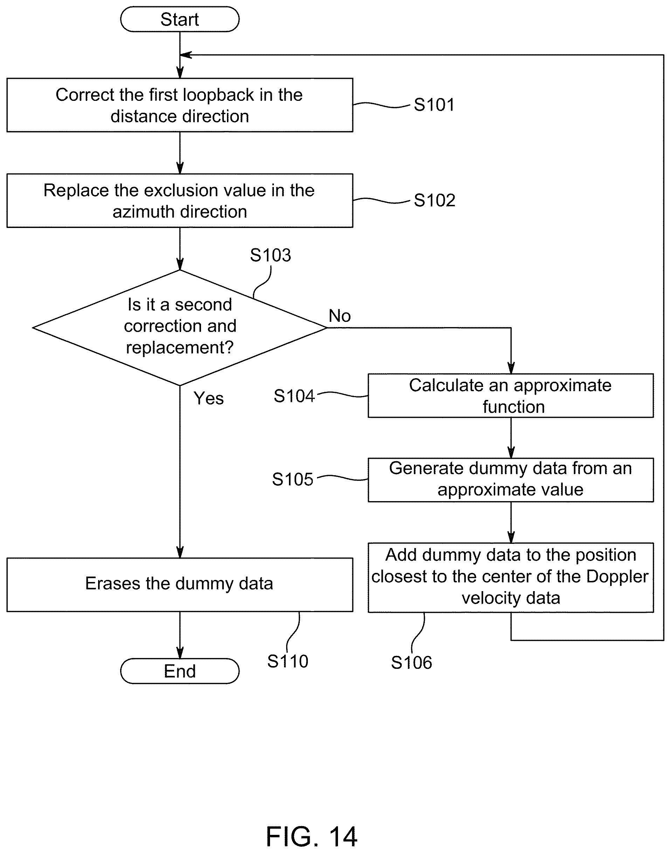

FIG. 14 is a flow chart showing basic processing performed by the processor for realizing the weather observation data generation module 10A. The specific processing contents have been described above, and a detailed description thereof will be omitted.

At step S101, the processor corrects the first loopback in the distance direction using the Doppler velocity data arranged in the distance direction.

At step S102, the processor replaces the exclusion value in the azimuth direction for the first time using the Doppler velocity data arranged in the azimuth direction.

At step S103, the processor checks if the correction and replacement is a second correction and replacement.

At step S104, the processor calculates an approximate function for generating dummy data if the correction and replacement is not the second correction and replacement. Then at step S105, the processor generates dummy data from an approximate value using the approximate function. At step S106, the processor adds dummy data to the position closest to the center of the Doppler velocity data after the first correction and replacement. Steps S101 to S103 are then repeated, in which at step S101, the processor corrects the second loopback in the distance direction by using the Doppler velocity data after the first correction, replacement, and addition of the dummy data.

Next, at step S102, the processor performs a second replacement of the exclusion value in the azimuth direction. At step S103, it is checked if the correction and replacement is the second correction and replacement, and at step S110, the processor erases the dummy data since this is the second correction and replacement.

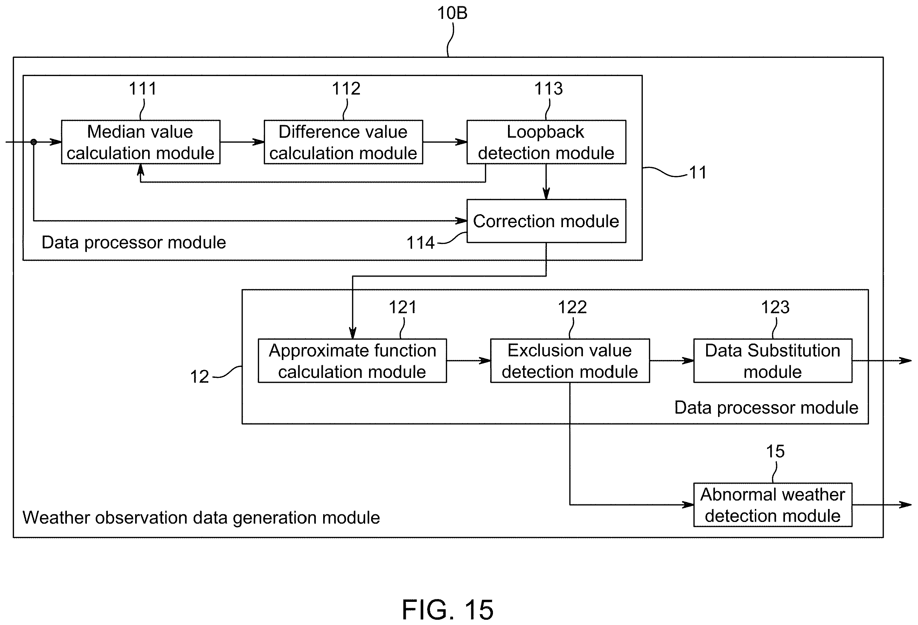

FIG. 15 is a functional block diagram of the weather observation data generation module 10B of a weather radar (not shown) according to the third embodiment, which is not covered by the subject-matter of the claims but is useful for understanding the invention. The weather radar according to the third embodiment differs from the weather radar apparatus 20 in the configuration of the weather observation data generation module 10B, and the other configurations are the same as those of the weather radar apparatus 20. Therefore, a description of the same portion is omitted.

As shown in FIG. 15, the weather observation data generation module 10B differs from the weather observation data generation module 10 of FIG. 1, in that an abnormal weather detection module 15 is added thereto.
The other configuration of the weather observation data generation module 10B is the same as that of the weather observation data generation module 10, and a description of the same portion is omitted.

The exclusion value detection module 122 outputs the exclusion value, to the abnormal weather detection module 15 upon detection of the same. Along with, the exclusion value detection module 122 outputs the distance direction and the direction in which the exclusion value is detected, to the abnormal weather detection module 15.

The abnormal weather detection module 15 notifies the occurrence of abnormal weather upon receiving the exclusion value as input. The notification may be a display, a sound, a buzzer sound or the like which can be recognized by the operator. As described above, the detection of the exclusion value assumes that the wind is uniform. Therefore, at the position where the exclusion value was detected, it is possible that the exclusion value was generated not by noise but by local abnormal weather. Therefore, the detection of the exclusion value is also used for the detection of abnormal weather, whereby the abnormal weather can be detected while performing steady weather observation.

At this time, if the distance direction and the direction in which the exclusion value is detected are input, the abnormal weather detection module 15 also notifies the position in which the exclusion value is detected. Thus, the occurrence position of the abnormal weather can be notified to the operator.

It should be noted that, for example, the abnormal weather detection module 15 may detect abnormal weather when a plurality of positions where the exclusion values are detected are adjacent to each other and the number of positions exceeds a predetermined number. Thus, the exclusion value due to noise and the exclusion value due to abnormal weather can be discriminated. Therefore, the abnormal weather detecting module 15 can more accurately detect and notify the abnormal weather.

The configuration of the abnormal weather detection module 15 according to the third embodiment can be applied to a weather observation data generation module having only the data processor module 12 and not the data processor module 11, as also shown in the first embodiment.

By using the Doppler velocity data processed as described above, the weather radar can obtain an image for weather observation. In this case, the weather radar is provided with a display image generation module (not shown) at a subsequent stage of the weather observation data generation module 10B. The display image generation module generates a display image of the weather observation data with the weather radar as a center by using a color or luminance corresponding to the value of the Doppler velocity data. The display image is displayed on a display device, for example. Thus, the operator can easily visually recognize the weather observation data and easily observe weather conditions around the weather radar.

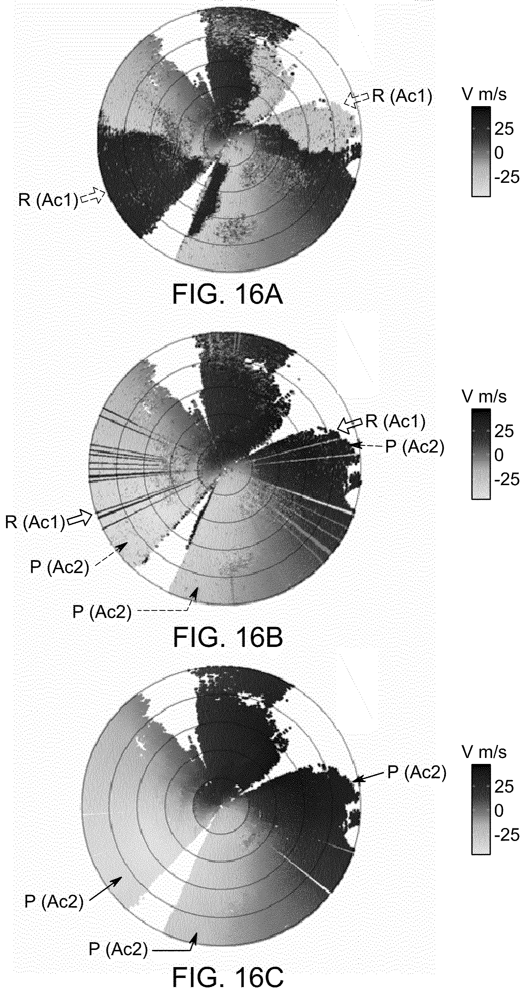

FIGs.16 (A), 16 (B), and 16 (C) are diagrams showing weather observation data when the weather observation data generation module 10 of FIG.1 is used. In FIGs. 16 (A), 16 (B), and 16 (C), weather observation data is generated in gray scale by using the value of Doppler velocity data.

FIG. 16(A) shows weather observation data based on measured Doppler velocity data. FIG. 16(B) shows weather observation data based on Doppler velocity data after correction of turning back in the distance direction. FIG.16 (C) shows weather observation data based on Doppler velocity data after replacement of exclusion values in the azimuth direction.

As shown in FIGs. 16(A) and 16(B), by correcting the loopback in the distance direction by the data processor module 11 of the weather observation data generation module 10, the loopback in the distance direction in the region R (Ac1) is corrected. Then, as shown in FIGs. 16(B) and 16(C), the exclusion value in the azimuth direction at the local position P(Ac2) is replaced by replacing the exclusion value in the azimuth direction by the data processor module 12 of the weather observation data generation module 10. Thus, by using the weather observation data generation module 10, accurate and easily visible weather observation data corresponding to actual weather conditions can be obtained.

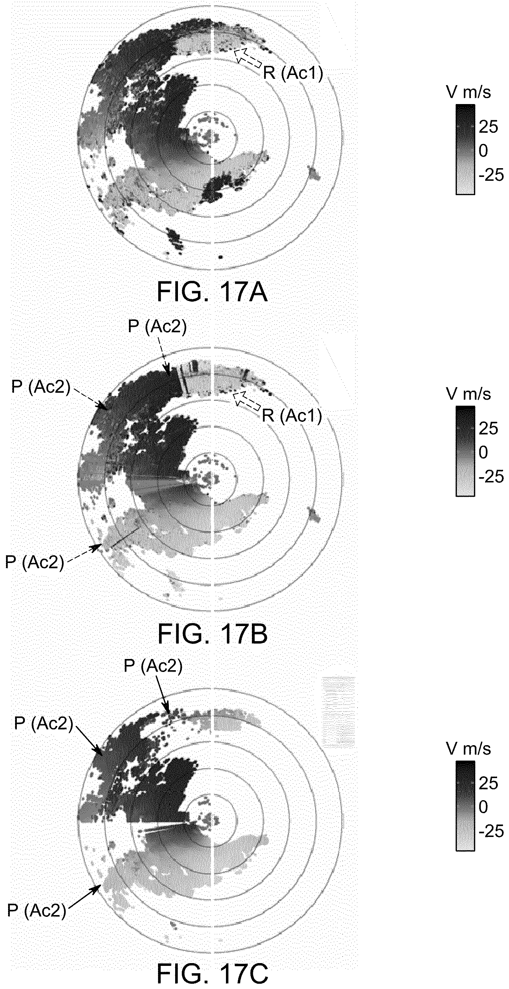

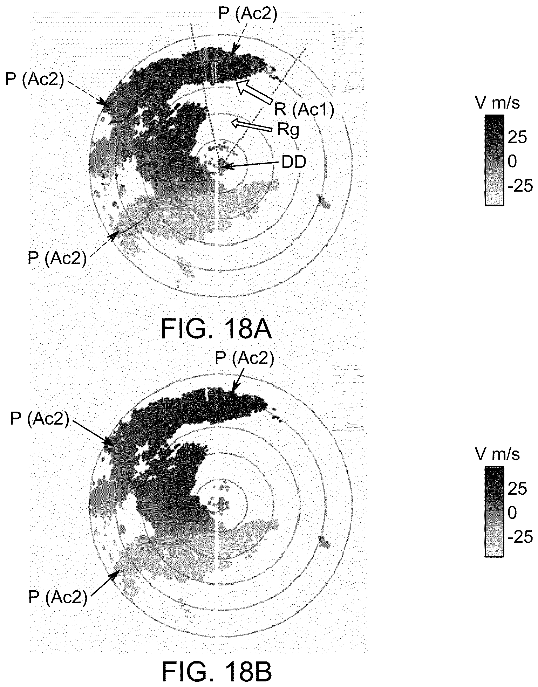

FIGs.17(A), 17(B), 17(C), 18(A), and 18(B) are diagrams showing weather observation data when the weather observation data generation module 10A of FIG. 10 is used. In FIGs. 17 (A), 17 (B), 17 (C), 18 (A), and 18 (B), weather observation data is generated in gray scale using the value of Doppler velocity data. FIG. 17 (A) shows weather observation data based on measured Doppler velocity data. FIG. 17 (B) shows weather observation data based on the Doppler velocity data after the first correction of turning back in the distance direction. FIG. 17 (C) shows weather observation data based on Doppler velocity data after replacement of the exclusion value in the first azimuth direction.

FIG. 18 (A) is weather observation data based on the Doppler velocity data after the second back-and-forth correction in the distance direction. FIG. 18 (B) shows weather observation data based on Doppler velocity data after replacement of the second azimuthal exclusion value.

As shown in FIGs.17 (A) and 17 (B), by correcting the first loopback in the distance direction by the data processor module 11 of the weather observation data generation module 10A, the loopback in the distance direction in the region R (Ac1) is corrected. Next, as shown in FIGs.17 (B) and 17 (C), the exclusion value in the azimuth direction at the local position P (Ac2) is replaced by replacing the exclusion value in the azimuth direction for the first time by the data processor module 12 of the weather observation data generation module 10A. In this case, the exclusion values continuously generated in the azimuth direction are deleted.

Next, dummy data are generated based on an approximate function calculated from Doppler velocity data arranged in the azimuthal direction by performing processing of a dummy data generation module 13 of a weather observation data generation module 10A. Then, dummy data are added to the position closest to the center DD by performing the processing of the dummy data addition module 14.

Next, as shown in FIGs.17(C) and 18(A), by correcting the second loopback in the distance direction by the data processor module 11, the loopback in the distance direction in the region R(Ac1) is recorrected. At this time, the added dummy data serves as a reference for turning back in the distance direction with respect to the region Rg which includes the region R (Ac1) and is defined by the azimuth direction in which the measured Doppler velocity data is missing. Therefore, turning back in the distance direction in the region R (Ac1) is accurately performed according to actual weather conditions.

Next, as shown in FIGs.18(A) and 18(B), the second exclusion value in the azimuth direction is substituted by the data processor module 12 of the weather observation data generation module 10A, whereby the exclusion value in the azimuth direction at the local position P (Ac2) is re-replaced. Thus, by using the weather observation data generation module 10A, accurate and easily visible weather observation data corresponding to actual weather conditions can be obtained.

Further, by using the weather observation data generation module 10A, even if there is a defect in the Doppler velocity data, accurate and easily visible weather observation data corresponding to actual weather conditions can be more surely obtained.

In the above description, a mode in which a median value is used for detection of loopback in the distance direction is shown. However, it may be a statistical reference value (statistically plausible representative values) for detection of loopback, for example, an average value or a mode value. However, by using the median value, even if the Doppler velocity data having locally different values exist in a predetermined range on the center side of the target position, the reference value for detecting the loopback does not largely change. Thus, the detection of the loopback is performed more accurately.

In addition, although the above description shows an embodiment in which a difference value is used for detecting a loopback in the distance direction, a value (e.g., ratio, etc.) which can compare the value of the Doppler velocity data of the target position with a statistical reference value such as a median value may be used.

In the above description, the difference value is used for the detection of the exclusion value, but a value (e.g., ratio, etc.) by which the value of the Doppler velocity data can be compared with the approximate value may be used.

Further, the above-described periodic function for approximation is a function in which one cycle in the azimuthal direction is one cycle, but when the wind tendency due to the season or the like is known at the position where the weather radar is arranged, an approximate function corresponding to the wind tendency may be appropriately used.

For example, in a place where the wind tendencies are constantly different between the right side and the left side of the weather radar, two functions for making the half circumference of the azimuth direction, one cycle may be used as an approximate function.

Further, in the above description, a mode in which replacement of the data of the exclusion value in the azimuth direction and abnormality detection are performed in parallel is shown. However, in a mode in which only abnormality detection is performed, the data substitution module 123 of the exclusion value may not be provided.

Alternatively, the data substitution module 123 for the exclusion value may perform processing for deleting the exclusion value instead of data substitution for the exclusion value.

### List of reference numerals

10, 10A, 10B: Weather Observation Data Generation Module
11, 12: Data Processor Module
13: Dummy Data Generation Module
14: Dummy Data Addition Module
15: Abnormal Weather Detection Module
20: Weather Radar Apparatus
21: Transmission Module
22: Transmission/Reception Switching Module
23: Reception Module
24: Doppler Velocity Data Calculation Module
111: Median Value Calculation Module
112: Difference Value Calculation Module
113: Loopback Detection Module
114: Correction Module
121: Approximate Function Calculation Module
122: Exclusion Value Detection Module
123: Data Substitution Module
200: Antenna

## Claims

1. A weather radar apparatus, comprising:
a Doppler velocity data calculation module for calculating Doppler velocity data of an observation object to be used for weather observation, being obtained for each position expressed in two-dimensional coordinates in a distance direction and an azimuth direction with reference to an antenna position as a center;
an approximate function calculation module for calculating an approximate function using a plurality of Doppler velocity data arranged in the azimuthal direction from among the Doppler velocity data of the observation object;
an exclusion value detecting module for detecting an exclusion value using the plurality of Doppler velocity data arranged in the azimuthal direction and a value of the approximate function;
a loopback detection module for detecting a loopback of a plurality of Doppler velocity data arranged in the distance direction, wherein the loopback detection module is configured to detect the loopback by comparing the Doppler velocity data of a target position in the distance direction with a statistical reference value using the Doppler velocity data of a plurality of positions on the center side of the target position; and
a loopback correction module for correcting the plurality of Doppler velocity data arranged in the distance direction; wherein
the approximate function calculation module uses the Doppler velocity data corrected by the loopback correction module
**characterized in that** the weather radar apparatus further comprises:
a dummy data generation module for generating dummy data of Doppler velocity data in an omnidirectional direction at a position closest to the center by using an approximate function of the Doppler velocity data over an entire circumference of the azimuthal direction at a predetermined position in the distance direction; and
a dummy data addition module for adding the dummy data to the plurality of Doppler velocity data before detection of the loopback,
wherein the loopback detection module reperforms the loopback detection using the plurality of Doppler velocity data after the addition of the dummy data,
the loopback correction module recorrects the loopback using the result of the detection of the loopback reperformed,
the approximate function calculation module recalculates the approximate function using the result of the loopback correction reperformed, and
the exclusion value detecting module detects the exclusion value using the re-calculated approximate function.

2. The weather radar apparatus of claim 1, further comprising:
a data substitution module for replacing the exclusion value with an approximate value calculated by the approximate function.

3. The weather radar apparatus of claim 1, further comprising:
an abnormal weather detecting module for detecting an abnormal weather by using the exclusion value.

4. The weather radar apparatus of any one of claims 1 to 3, wherein:
the exclusion value detecting module detects the Doppler velocity data as the exclusion value when a difference value between the Doppler velocity data and an approximate value of the Doppler velocity data calculated by the approximate function exceeds a threshold value for exclusion detection.

5. The weather radar apparatus of any one of claims 1 to 4, wherein:
the approximate function is a periodic function in which one cycle in the azimuthal direction is set as one cycle.

6. The weather radar apparatus according to any of the preceding claims, wherein the statistical reference value is a moving median value.

7. A weather radar observation method performed by a processor, comprising:
calculating an approximate function by using a plurality of Doppler velocity data arranged in the azimuth direction out of Doppler velocity data of an observation object used for weather observation obtained for each position expressed in two-dimensional coordinates in the distance direction and the azimuth direction with reference to an antenna position as a center;
detecting an exclusion value using the plurality of Doppler velocity data arranged in the azimuthal direction and the value of the approximate function;
detecting a loopback of a plurality of Doppler velocity data arranged in the distance direction by comparing the Doppler velocity data of a target position in the distance direction with a statistical reference value using the Doppler velocity data of a plurality of positions on the center side of the target position;
correcting the loopback of the Doppler velocity data arranged in the distance direction;
calculating the approximate function by using the Doppler velocity data whose loopback is corrected;
generating dummy data using the Doppler velocity data over an entire circumference in the azimuthal direction;
adding the dummy data to the Doppler velocity data at a position closest to the center in the distance direction after a replacement of the exclusion value;
reperforming the loopback detection using the plurality of Doppler velocity data after the addition of the dummy data;
recorrecting the loopback using the result of the detection of the loopback reperformed;
recalculating the approximate function using the result of the loopback correction reperformed;
detecting a second exclusion value using the re-calculated approximate function.

8. The weather radar observation method of claim 7, further comprising:
replacing the exclusion value with an approximation value calculated by the approximate function.

9. A non-transitory computer-readable recording medium storing a program causing a processor of a weather radar observation apparatus to execute processing, the processor configured to control operation of the weather radar observation apparatus, the processing comprising the steps according to the method of claims 7 or 8.

## Patentansprüche

1. Wetterradarvorrichtung, aufweisend:
ein Dopplergeschwindigkeitsdaten-Berechnungsmodul zum Berechnen von Dopplergeschwindigkeitsdaten eines Beobachtungsobjekts, das zur Wetterbeobachtung zu verwenden ist, die für jede Position erhalten werden, die in zweidimensionalen Koordinaten in einer Entfernungsrichtung und einer Azimutrichtung mit Bezug auf eine Antennenposition als ein Zentrum ausgedrückt wird;
ein Näherungsfunktions-Berechnungsmodul zum Berechnen einer Näherungsfunktion unter Verwendung einer Vielzahl von Dopplergeschwindigkeitsdaten, die in der Azimutrichtung aus den Dopplergeschwindigkeitsdaten des Beobachtungsobjekts angeordnet sind;
ein Ausschlusswert-Erfassungsmodul zum Erfassen eines Ausschlusswerts unter Verwendung der Vielzahl von Dopplergeschwindigkeitsdaten, die in der Azimutrichtung angeordnet sind, und eines Werts der Näherungsfunktion;
ein Loopback-Erfassungsmodul zum Erfassen eines Loopbacks einer Vielzahl von Dopplergeschwindigkeitsdaten, die in der Entfernungsrichtung angeordnet sind, wobei das Loopback-Erfassungsmodul konfiguriert ist, den Loopback durch Vergleichen der Dopplergeschwindigkeitsdaten einer Zielposition in der Entfernungsrichtung mit einem statistischen Referenzwert unter Verwendung der Dopplergeschwindigkeitsdaten einer Vielzahl von Positionen auf der Zentrumsseite der Zielposition zu erfassen; und
ein Loopback-Korrekturmodul zum Korrigieren der Vielzahl von Dopplergeschwindigkeitsdaten, die in der Entfernungsrichtung angeordnet sind; wobei das Näherungsfunktions-Berechnungsmodul die Dopplergeschwindigkeitsdaten verwendet, die durch das Loopback-Korrekturmodul korrigiert werden,
**dadurch gekennzeichnet, dass** die Wetterradarvorrichtung ferner aufweist:
ein Dummy-Datenerzeugungsmodul zum Erzeugen von Dummy-Daten von Dopplergeschwindigkeitsdaten in einer omnidirektionalen Richtung an einer Position, die dem Zentrum am nächsten ist, durch Verwenden einer Näherungsfunktion der Dopplergeschwindigkeitsdaten über einen gesamten Umfang der Azimutrichtung an einer vorbestimmten Position in der Entfernungsrichtung; und
ein Dummy-Datenhinzufügungsmodul zum Hinzufügen der Dummy-Daten zu der Vielzahl von Dopplergeschwindigkeitsdaten vor der Erfassung des Loopbacks,
wobei das Loopback-Erfassungsmodul die Loopback-Erfassung unter Verwendung der Vielzahl von Dopplergeschwindigkeitsdaten nach der Hinzufügung der Dummy-Daten erneut durchführt,
das Loopback-Korrekturmodul den Loopback unter Verwendung des Ergebnisses der Erfassung des erneut durchgeführten Loopbacks erneut korrigiert,
das Näherungsfunktions-Berechnungsmodul die Näherungsfunktion unter Verwendung des Ergebnisses der erneut durchgeführten Loopback-Korrektur erneut berechnet, und
das Ausschlusswert-Erfassungsmodul den Ausschlusswert unter Verwendung der erneut berechneten Näherungsfunktion erfasst.

2. Wetterradarvorrichtung nach Anspruch 1, ferner aufweisend:
ein Datensubstitutionsmodul zum Ersetzen des Ausschlusswerts durch einen Näherungswert, der durch die Näherungsfunktion berechnet wird.

3. Wetterradarvorrichtung nach Anspruch 1, ferner aufweisend:
ein Anormalwettererfassungsmodul zum Erfassen eines anormalen Wetters unter Verwendung des Ausschlusswerts.

4. Wetterradarvorrichtung nach einem der Ansprüche 1 bis 3, wobei:
das Ausschlusswert-Erfassungsmodul die Dopplergeschwindigkeitsdaten als den Ausschlusswert erfasst, wenn ein Differenzwert zwischen den Dopplergeschwindigkeitsdaten und einem Näherungswert der Dopplergeschwindigkeitsdaten, der durch die Näherungsfunktion berechnet wird, einen Schwellenwert für die Ausschlusserfassung überschreitet.

5. Wetterradarvorrichtung nach einem der Ansprüche 1 bis 4, wobei:
die Näherungsfunktion eine periodische Funktion ist, in der ein Zyklus in der Azimutrichtung als ein Zyklus festgelegt ist.

6. Wetterradarvorrichtung nach einem der vorhergehenden Ansprüche, wobei der statistische Referenzwert ein gleitender Medianwert ist.

7. Wetterradarbeobachtungsverfahren, das von einem Prozessor durchgeführt wird, aufweisend:
Berechnen einer Näherungsfunktion unter Verwendung einer Vielzahl von Dopplergeschwindigkeitsdaten, die in der Azimutrichtung aus Dopplergeschwindigkeitsdaten eines Beobachtungsobjekts angeordnet sind, das zur Wetterbeobachtung verwendet wird, die für jede Position erhalten werden, die in zweidimensionalen Koordinaten in der Entfernungsrichtung und der Azimutrichtung mit Bezug auf eine Antennenposition als ein Zentrum ausgedrückt wird;
Erfassen eines Ausschlusswerts unter Verwendung der Vielzahl von Dopplergeschwindigkeitsdaten, die in der Azimutrichtung angeordnet sind, und des Werts der Näherungsfunktion;
Erfassen eines Loopbacks einer Vielzahl von Dopplergeschwindigkeitsdaten, die in der Entfernungsrichtung angeordnet sind, durch Vergleichen der Dopplergeschwindigkeitsdaten einer Zielposition in der Entfernungsrichtung mit einem statistischen Referenzwert unter Verwendung der Dopplergeschwindigkeitsdaten einer Vielzahl von Positionen auf der Zentrumsseite der Zielposition;
Korrigieren des Loopbacks der Dopplergeschwindigkeitsdaten, die in der Entfernungsrichtung angeordnet sind;
Berechnen der Näherungsfunktion unter Verwendung der Dopplergeschwindigkeitsdaten, deren Loopback korrigiert wird;
Erzeugen von Dummy-Daten unter Verwendung der Dopplergeschwindigkeitsdaten über einen gesamten Umfang in der Azimutrichtung;
Hinzufügen der Dummy-Daten zu den Dopplergeschwindigkeitsdaten an einer Position, die dem Zentrum in der Entfernungsrichtung am nächsten ist, nach einem Ersetzen des Ausschlusswerts;
erneutes Durchführen der Loopback-Erfassung unter Verwendung der Vielzahl von Dopplergeschwindigkeitsdaten nach der Hinzufügung der Dummy-Daten;
erneutes Korrigieren des Loopbacks unter Verwendung des Ergebnisses der Erfassung des erneut durchgeführten Loopbacks;
erneutes Berechnen der Näherungsfunktion unter Verwendung des Ergebnisses der erneut durchgeführten Loopback-Korrektur;
Erfassen eines zweiten Ausschlusswerts unter Verwendung der erneut berechneten Näherungsfunktion.

8. Wetterradarbeobachtungsverfahren nach Anspruch 7, ferner aufweisend:
Ersetzen des Ausschlusswerts durch einen Näherungswert, der durch die Näherungsfunktion berechnet wird.

9. Nicht-transitorisches computerlesbares Aufzeichnungsmedium, das ein Programm speichert, das einen Prozessor einer Wetterradarbeobachtungsvorrichtung veranlasst, eine Verarbeitung auszuführen, wobei der Prozessor konfiguriert ist, den Betrieb der Wetterradarbeobachtungsvorrichtung zu steuern, wobei die Verarbeitung die Schritte gemäß dem Verfahren nach Anspruch 7 oder 8 aufweist.

## Revendications

1. Appareil radar météorologique, comprenant :
un module de calcul de données de vitesse Doppler pour calculer des données de vitesse Doppler d'un objet d'observation à utiliser pour l'observation météorologique, obtenues pour chaque position exprimée en coordonnées bidimensionnelles dans une direction de distance et une direction d'azimut par rapport à une position d'antenne utilisée comme centre ;
un module de calcul de fonction d'approximation pour calculer une fonction d'approximation à l'aide d'une pluralité de données de vitesse Doppler agencées dans la direction azimutale à partir des données de vitesse Doppler de l'objet d'observation ;
un module de détection de valeur d'exclusion pour détecter une valeur d'exclusion à l'aide de la pluralité de données de vitesse Doppler agencées dans la direction azimutale et d'une valeur de la fonction d'approximation ;
un module de détection de bouclage pour détecter un bouclage d'une pluralité de données de vitesse Doppler agencées dans la direction de distance, dans lequel le module de détection de bouclage est configuré pour détecter le bouclage en comparant les données de vitesse Doppler d'une position cible dans la direction de distance à une valeur de référence statistique à l'aide des données de vitesse Doppler d'une pluralité de positions sur le côté central de la position cible ; et
un module de correction de bouclage pour corriger la pluralité de données de vitesse Doppler agencées dans la direction de distance ; dans lequel
le module de calcul de fonction d'approximation utilise les données de vitesse Doppler corrigées par le module de correction de bouclage
**caractérisé en ce que** l'appareil radar météorologique comprend en outre :
un module de génération de données factices pour générer des données factices de données de vitesse Doppler dans une direction omnidirectionnelle à une position la plus proche du centre à l'aide d'une fonction d'approximation des données de vitesse Doppler sur une circonférence entière de la direction azimutale à une position prédéterminée dans la direction de distance ; et
un module d'ajout de données factices pour ajouter les données factices à la pluralité de données de vitesse Doppler avant la détection du bouclage,
dans lequel le module de détection de bouclage réalise une nouvelle détection de bouclage à l'aide de la pluralité de données de vitesse Doppler après l'ajout des données factices,
le module de correction de bouclage corrige à nouveau le bouclage à l'aide du résultat de la nouvelle détection de bouclage,
le module de calcul de fonction d'approximation recalcule la fonction d'approximation à l'aide du résultat de la nouvelle correction de bouclage, et
le module de détection de la valeur d'exclusion détecte la valeur d'exclusion à l'aide de la fonction d'approximation recalculée.

2. Appareil radar météorologique selon la revendication 1, comprenant en outre :
un module de substitution de données pour remplacer la valeur d'exclusion par une valeur approximative calculée par la fonction d'approximation.

3. Appareil radar météorologique selon la revendication 1, comprenant en outre :
un module de détection de conditions météorologiques anormales pour détecter des conditions météorologiques anormales à l'aide de la valeur d'exclusion.

4. Appareil radar météorologique selon l'une des revendications 1 à 3, dans lequel :
le module de détection de valeur d'exclusion détecte les données de vitesse Doppler comme étant une valeur d'exclusion lorsqu'une valeur de différence entre les données de vitesse Doppler et une valeur approximative des données de vitesse Doppler calculée par la fonction d'approximation dépasse une valeur seuil pour la détection d'exclusion.

5. Appareil radar météorologique selon l'une des revendications 1 à 4, dans lequel :
la fonction d'approximation est une fonction périodique dans laquelle un cycle dans la direction azimutale est défini comme un cycle.

6. Appareil radar météorologique selon l'une des revendications précédentes, dans lequel la valeur de référence statistique est une valeur médiane mobile.

7. Procédé d'observation par radar météorologique réalisé par un processeur, comprenant :
le calcul d'une fonction d'approximation à l'aide d'une pluralité de données de vitesse Doppler agencées dans la direction d'azimut à partir de données de vitesse Doppler d'un objet d'observation utilisé pour l'observation météorologique obtenues pour chaque position exprimée en coordonnées bidimensionnelles dans la direction de distance et la direction d'azimut par rapport à une position d'antenne utilisée comme centre ;
la détection d'une valeur d'exclusion à l'aide de la pluralité de données de vitesse Doppler agencées dans la direction azimutale et de la valeur de la fonction d'approximation ;
la détection d'un bouclage d'une pluralité de données de vitesse Doppler agencées dans la direction de distance par comparaison des données de vitesse Doppler d'une position cible dans la direction de distance à une valeur de référence statistique à l'aide des données de vitesse Doppler d'une pluralité de positions sur le côté central de la position cible ;
la correction du bouclage des données de vitesse Doppler agencées dans la direction de distance ;
le calcul de la fonction d'approximation à l'aide des données de vitesse Doppler dont le bouclage est corrigé ;
la génération de données factices à l'aide des données de vitesse Doppler sur une circonférence entière dans la direction azimutale ;
l'ajout des données factices aux données de vitesse Doppler à une position la plus proche du centre dans la direction de distance après un remplacement de la valeur d'exclusion ;
la réalisation d'une nouvelle détection de bouclage à l'aide de la pluralité de données de vitesse Doppler après l'ajout des données factices ;
la réalisation d'une nouvelle correction de bouclage à l'aide du résultat de la nouvelle détection de bouclage ;
le recalcul de la fonction d'approximation à l'aide du résultat de la nouvelle correction de bouclage ;
la détection d'une deuxième valeur d'exclusion à l'aide de la fonction d'approximation recalculée.

8. Procédé d'observation par radar météorologique selon la revendication 7, comprenant en outre :
le remplacement de la valeur d'exclusion par une valeur approximative calculée par la fonction d'approximation.

9. Support d'enregistrement non transitoire lisible par ordinateur stockant un programme amenant un processeur d'un appareil d'observation par radar météorologique à exécuter un traitement, le processeur étant configuré pour commander le fonctionnement de l'appareil d'observation par radar météorologique, le traitement comprenant les étapes selon le procédé des revendications 7 ou 8.
